Europäisches Patentamt

European Patent Office

Office européen des brevets

(11) Veröffentlichungsnummer: **0 079 019**
A1

# EUROPÄISCHE PATENTANMELDUNG

(21) Anmeldenummer: 82110064.1

(22) Anmeldetag: 02.11.82

(51) Int. Cl.³: **B 23 K 28/00**
 **H 05 H 1/26**

(30) Priorität: 07.11.81 DE 8132660 U

(43) Veröffentlichungstag der Anmeldung:
18.05.83 Patentblatt 83/20

(84) Benannte Vertragsstaaten:
FR GB IT SE

(71) Anmelder: Haferkamp, Heinz, Prof.Dr.Ing.
Der Anger 6
D-3340 Wolfenbüttel(DE)

(72) Erfinder: Bach, Friedrich, Dr.
Krendelstrasse 53
D-3004 Iserhagen 1(DE)

(72) Erfinder: Osterlitz, Hermann
Nelkenweg 51
D-4044 Kaarst 1(DE)

(74) Vertreter: Roesner, Werner
MESSER GRIESHEIM GmbH Patentabteilung Postfach
3746 Hanauer Landstrasse 330
D-6000 Frankfurt/Main 1(DE)

(54) Plasmabrenner, insbesondere zum Schneiden.

(57) Dieser Plasmabrenner besteht aus vier Teilen, dem Versorgungsteil (11), dem Versorgungszwischenstück (13) den Schnellverschlußkupplungen (12) und dem Brennerteil (14).

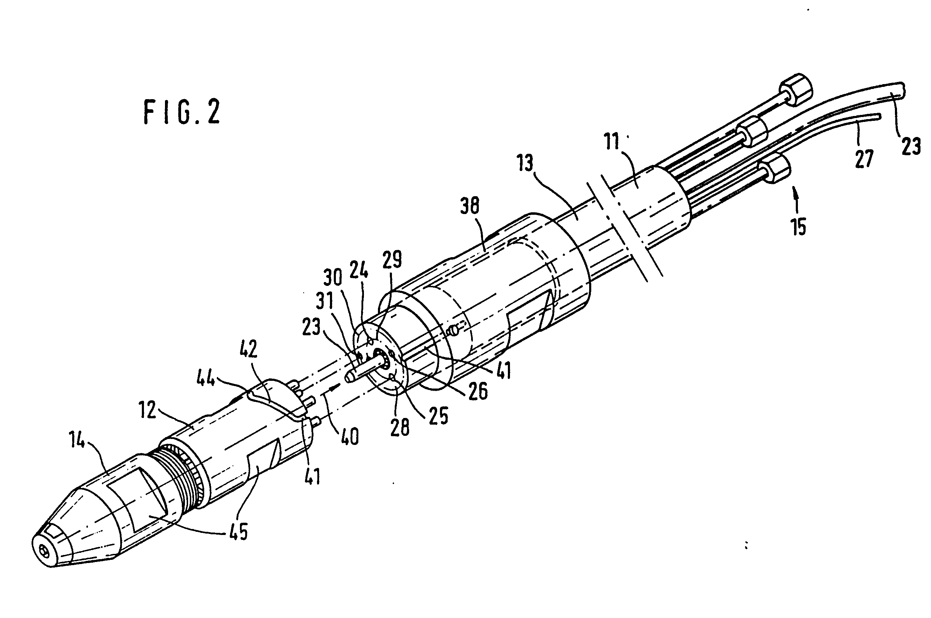

Diese Hauptteile sind sehr leicht und einfach mittels eines Manipulators zu trennen bzw. zusammenzustecken. Durch individuelle Ausbildungen der Versorgungszwischenstücke (13) können alle Schneidaufgaben trotz der eigenschränkten Mobilität der Schneidanlage in radioaktiven Räumen durchgeführt werden. Instandsetzungsarbeiten, z.B. Austausch der hochbeanspruchten Düsen, oder Umrüstung für andere Schneidaufgaben lassen sich bei einfacher Handhabung in kurzer Zeit problemlos durchführen. Der Plasmabrenner (10) is ferner wegen der einfachen Handhabung auch vorteilhaft in großen Wassertiefen einzusetzen (Fig. 2).

FIG. 1

- 1 -

MESSER GRIESHEIM GMBH                    MG 1407

Kennwort: Reaktor-Plasmabrenner

Erfinder: Dr. Bach                       Ordner: VIII
          Osterlitz


Plasmabrenner, insbesondere zum Schneiden

Die Erfindung betrifft einen Plasmabrenner nach dem Oberbegriff des Anspruchs 1.

Für Schneidaufgaben in radioaktiven Räumen, wie z.B. in
Reaktordruckbehältern zwecks Instandsetzungs- oder Demontagearbeiten kommen nur Plasmabrenner, die in Plasmaschneideinrichtungen eingebaut sind für Atmosphären- und Unterwassereinsatz in Betracht. Diese Plasmabrenner, die insbesondere für das Zerschneiden der im Reaktorbau überwiegend
verwendeten austenitischen Stähle bzw. schweißplattierten
austenitischen Stähle eingesetzt werden, erfordern eine
hohe Mobilität und äußerst einfache Wartungs- und Instandsetzungseigenschaften, um einerseits das Schneiden in allen
Ebenen überhaupt zu ermöglichen und andererseits bei Störungen
an dem Plasmabrenner kurzfristig die Betriebsbereitschaft
wieder herstellen zu können.

- 2 -

Es ist bekannt, zur Wartung, insbesondere zur Auswechselung von schnell verschleißbaren Teilen, wie Düse und Elektrode, bei einem gattungsgemäßen Plasma-Schneidbrenner, der aus zwei voneinander lösbaren Teilen besteht, die Elektrode, den Elektrodenhalter, den Isolator und die Düse in dem einen Teil A und Mittel für die Zuführung des elektrischen Stromes und die Leitungen für die Zuführung des Kühlmittels sowie des Plasmagases in einem zweiten Teil B anzuordnen (DE-PS 25 45 495).

Derartig konstruktiv ausgebildete Plasma-Schneidbrenner erfordern komplizierte und aufwendige Führungseinrichtungen, um den Brenner in eine bestimmte Schneidposition zur Materialoberfläche zu führen, die für ein einwandfreies und rationelles Schneiden erforderlich ist. Die Anforderungen sind um so höher, weil sowohl die Brennerführung als auch die Störungsbeseitigungs- bzw. Instandsetzungsarbeiten ausschließlich mittels Manipulatoren durchgeführt werden müssen.

Die Aufgabe der Erfindung besteht darin, einen Plasmabrenner derart zu verbessern, daß die Nachteile an bekannten Plasmaschneideinrichtungen behoben werden und die vorbeschriebenen Forderungen für die Durchführbarkeit von beliebigen Schneidaufgaben in verschiedenen Schneidebenen in radioaktiven Räumen sowie über und unter Wasser erreichbar sind.

Diese Aufgabe wird bei einem gattungsgemäßen Plasmabrenner durch die kennzeichnenden Merkmale des Anspruchs 1 gelöst.

Weitere vorteilhafte Ausbildungen der Erfindung sind in den Unteransprüchen angegeben.

Ein mit diesen Merkmalen ausgestatteter Plasmabrenner ermöglicht durch seine hohe Anpassungsfähigkeit selbst an schwerzugänglichen Arbeitsbereichen ein einwandfreies Zerlegen der

- 3 -

Stahlteile und sichert eine hohe Schneidleistung. Bei ständig wechselnden Schneidebenen braucht der Plasmabrenner nicht aus den z. B. radioaktiven Räumen entfernt werden. Es genügt die Schnellverschlußkupplungen zwischen Versorgungsteil und Versorgungszwischenstück bzw. Versorgungszwischenstück und Brennerteil mittels eines Manipulators anzukuppeln und ein beispielsweise gerades Versorgungszwischenstück durch ein gekröpftes zu ersetzen.

Ferner ergibt sich die Möglichkeit, defekte Düsen durch einfachen Austausch des Brennerteils zu ersetzen oder auch für eine unterschiedliche Schneidleistung den Plasmabrenner mit einer größeren bzw. einer kleineren Düse umzurüsten. Das ist nicht nur in radioaktiven Räumen von Vorteil, sondern auch für Schneidaufgaben in großen Wassertiefen, wo in unterschiedlichen Arbeitstiefen erhebliche Druckdifferenzen bestehen und die Schneidleistung nicht nur auf Materialart und Dicke, sondern auch auf den Wasserdruck der entsprechenden Wassertiefe und jeweils spezifische Leistungsgrößen der Brennerteile erfordern. Diese notwendigen Umstellungs- und auch Instandsetzungsarbeiten können selbst von Tauchern problemlos durchgeführt werden.

Alle vorbeschriebenen Vorteile müssen im Hinblick auf die Schwierigkeit gesehen werden, daß Plasmaschneideinrichtungen sei es in radioaktiven Räumen oder großen Wassertiefen mit sehr langen Versorgungsleitungen kaum noch aus der vertikalen hängenden Lage zu handhaben sind. Andere, gegebenenfalls leichtere Schneideinrichtungen sind zum Zerschneiden von seewasserfesten Stählen, z. B. Chrom-Nickelstählen, wie sie in der Offshore-Technik Verwendung finden, ungeeignet.

Ein Ausführungsbeispiel der Erfindung ist in der Zeichnung

- 4 -

dargestellt und wird im folgenden unter Hinweis auf weitere vorteilhafte Merkmale beschrieben.

Es veranschaulicht:

Fig. 1 eine schematische Teileübersicht des Plasmabrenners;

Fig. 2 eine perspektivische Darstellung des geraden Versorgungszwischenstückes mit ausgekuppelter Schnellverschlußkupplung und Brennerteil ;

Fig. 3 und 4 einen vergrößerten Ausschnitt aus Fig. 1;

Fig. 5 ein gekröpftes Versorgungszwischenstück.

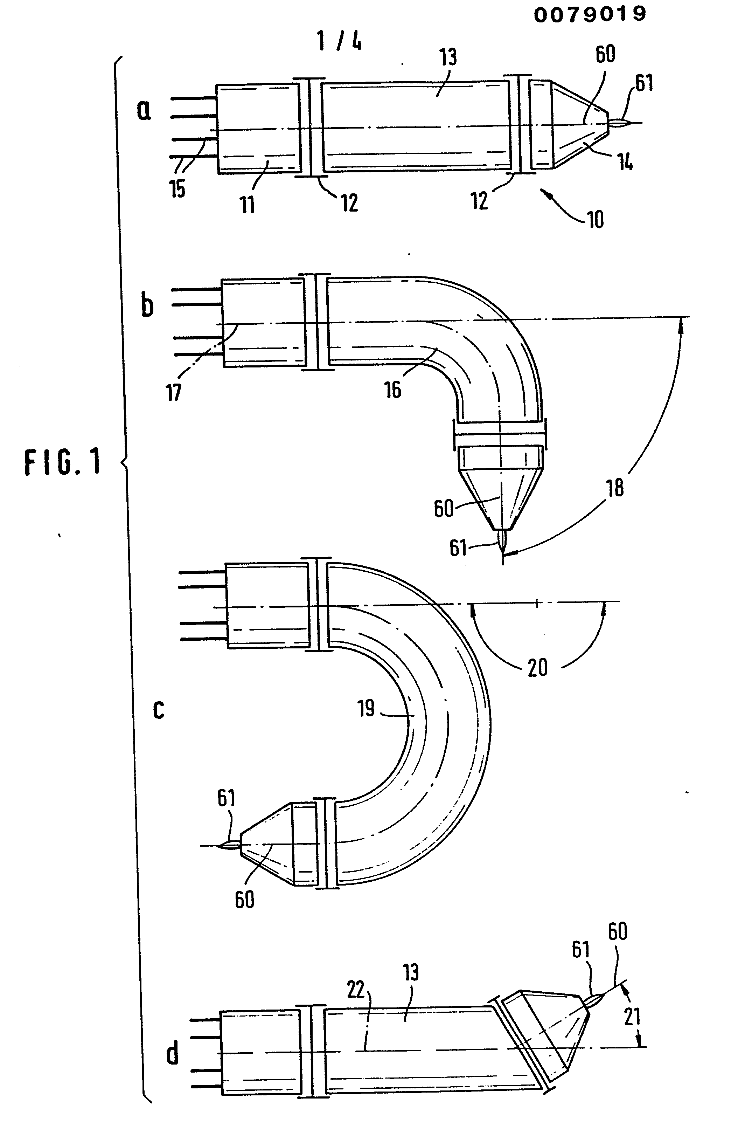

In Fig. 1 ist eine schematische Teileübersicht des Plasmabrenners 10 dargestellt, der aus Versorgungsteil 11, Schnellverschlußkupplung 12, Versorgungszwischenstück 13 und Brennerteil 14 besteht. An dem Versorgungteil 11 sind alle Versorgungsleitungen 15 für die erforderlichen gasförmigen und flüssigen Medien, sowie für die Zuführung der elektrischen Energie angeschlossen. Zwischen Versorgungteil 11 und Brennerteil 14 ist ein gerades Versorgungszwischenstück 13 (Fig. 1a) über je eine Schnellverschlußkupplung 12 mit Versorgungsteil 11 und Brennerteil 14 verbunden. Die Verbindung des Brennerteils 14 mit dem geraden Versorgungszwischenstück 13 bzw. dem Versorgungsteil 11 mit dem geraden Versorgungszwischenstück 13 über eine Schnellverkupplung ermöglicht ein Zerlegen des Plasmabrenners 10 und ein Austauschen der Einheiten 12, 13, 14 in einfachster Art und Weise.

- 5 -

Dies ist insbesondere in radioaktiven Räumen erforderlich, weil sowohl die Brennerführung als auch die Störungsbeseitigung bzw. Instandsetzungsarbeiten ausschließlich mittels Manipulatoren durchgeführt werden müssen. Um ein Zerschneiden der im Reaktorbau hauptsächlich verwendeten austenitischen Stähle bzw. schweißplattierten austenitischen Stähle bei ständig wechselnden Schneidebenen innerhalb von radioaktiven Räumen mit dem Plasmabrenner 10 zu ermöglichen, ist das Versorgungszwischenstück 13 gerade (Fig. 1a) oder stumpfwinklig bis spitzwinklig gekröpft 16 (Fig. 1b) ausgebildet. Mit diesen, insbesondere unter einem Winkel 18 von 0 bis 90° zur Plasmabrennerachse 17 gebogenen und mit Brennerteil 14 und Versorgungsteil 11 verbindbaren Versorgungszwischenstükken 13, 16 wird vorteilhaft die Austrittsrichtung 60 des Plasmastrahles 61 der jeweiligen Schneidebene angepaßt und somit ein Zerschneiden der austenitischen Stähle bei geringstem Platzbedarf ermöglicht.

In Fig. 1c ist ein flexibles Versorgungszwischenstück 19 als Prinzipskizze dargestellt, das unter einem Winkel 20 von vorzugsweise 0 bis 180° stufenlos über pneumatische, elektrische oder mechanische Antriebe an die Schneidebene angepaßt werden kann. Der hierbei entstehende Arbeitsbereich entspricht der geometrischen Form einer Halbkugel.

In Fig. 1d ist ein Plasmabrenner 10 mit einem geraden Versorgungszwischenstück 13 schematisch dargestellt, bei dem die nicht näher dargestellten Versorgungsleitungen 15 für Plasmagas, Strom und Kühlmittel und die ebenfalls nicht näher dargestellte Kathode unter einem Winkel 21 von 0 bis 90° zur Achse 22 des Versorgungszwischenstückes 13 angeordnet sind. Diese Ausbildung des Plasmabrenners 10 ermöglicht einen besonders einfachen Austausch des kostengünstig herstellbaren Versorgungszwischenstückes 13.

- 6 -

In Fig. 2 ist ein Plasmabrenner 10 dargestellt, der aus dem geraden Versorgungszwischenstück 13, der von dem geraden Versorgungszwischenstück 13 ausgekuppelten Schnellverschluß-kupplung 12 und dem von der Schnellverschlußkupplung 12 abschraubbaren Brennerteil 14 besteht. Dabei ist in besonders vorteilhafter, nicht näher dargestellter Weiterbildung der Brennerteil 14 ebenfalls über eine Schnellverschlußverbindung auswechselbar.

Mit dem Versorgungszwischenstück 13 sind über die nur schematisch dargestellte Versorgungseinheit 11 und die nicht dar-gestellte Schnellverschlußkupplung 12 alle Versorgungsleitun-gen 15 für das Plasmagas, den Strom und das Kühlmittel und die Kathode verbunden.

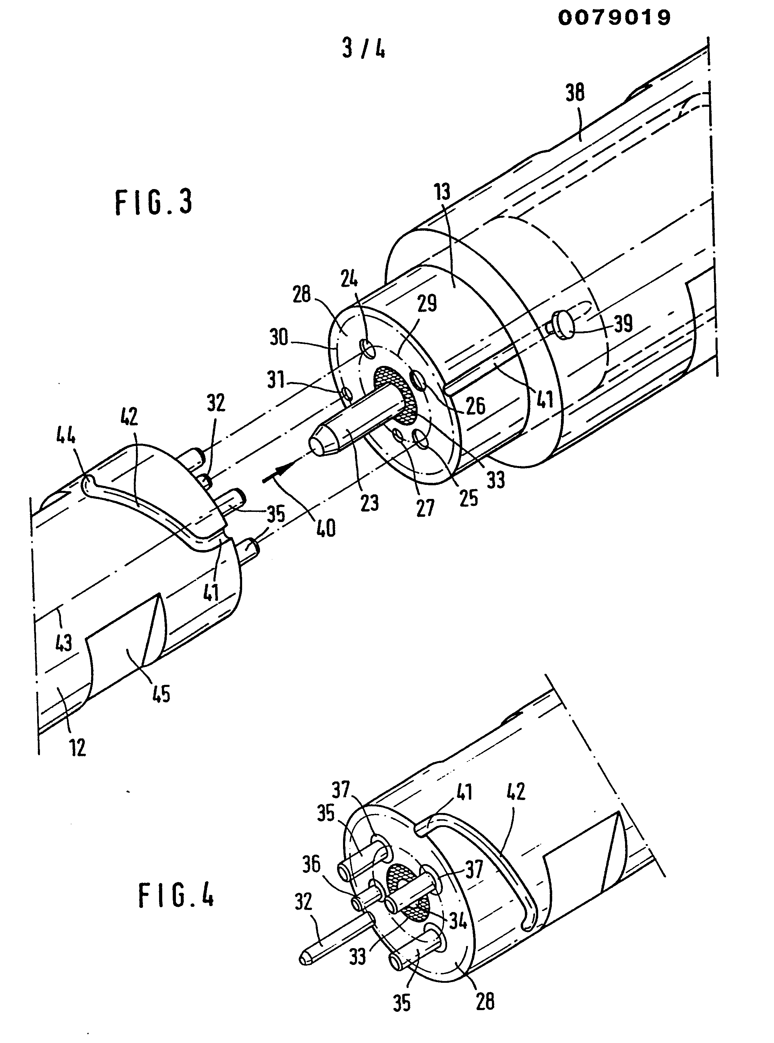

Außer der hervorstehenden Kathode 23 für den Lichtbogenstrom enden die Zu- und Rücklaufleitungen 24, 26 für das Kühlwasser, die Plasmagasleitung 26 sowie die Zuleitung 27 für den Zündstrom zur Erzeugung des Pilotlichtbogens an der Kupplungsoberfläche 28 des Versorgungszwischenstückes 13 und sind konzentrisch auf einem Umkreis 29 um die Kathode 23 angeordnet. Auf einen weiteren konzentrisch um die Kathode 23 angeordneten Umkreis 30 ist eine Bohrung 31 für den Arretierungsstift 32 angeordnet (Fig. 3). Durch diese Anordnung wird ein leichtes Zusammenstecken der Schnellverschlußkupplung 12 mit dem Versorgungszwischenstück 13 erzielt, ohne Gefahr, daß insbesondere die empflindlichen Rohrleitungen 24, 25, 26 für das Plasmagas und das Kühlmedium beim Zusammenstecken deformiert und undicht werden.

Zunächst wird beim Zusammenstecken die weit hervorstehende Kathode 23 in die mit einem Isolationsmantel 33 umgebende Steckbohrung 34 eingeführt, bis der etwas kürzere Arretierungsstift 32 sich auf den Umkreis 30 der Kupplungsoberfläche 28 abstützt. Die Steckverbindungen 35 der Rohrleitungen

- 7 -

und der Stecker 36 berühren in dieser um die Kathode 23 zentrierte Einführungsposition der Schnellverschlußkupplung 12
mit dem Versorgungszwischenstück 13 noch nicht die Kupplungsoberfläche 28. Erst bei gefahrloser radialer Drehung der
Schnellverschlußkupplung 12 zum Versorgungszwischenstück 13
um die bereits eingeführte Kathode 23 wird der Arretierungsstift 32 über den Umkreis 30 bis zu der Bohrung 31 bewegt
und kann in diese eingeführt werden. In dieser Position stehen die Steckverbindungen 35, 36 genau in axialer Flucht der
korrespondierenden Leitungen 24, 25, 26 und sind ohne Gefahr
einer Deformierung miteinander kuppelbar.

Ein weiteres vorteilhaftes Merkmal besteht darin, daß alle
Dichtungselemente die dem Verschleiß unterliegen, z. B.
O-Ringe 37 um die abzudichtenden Rohrleitungen 24, 25 und 26
sowie die Dichtungen der stromführenden Leitungen 23 und 26
ausschließlich an der Schnellverschlußkupplung 12 angeordnet
sind, so daß beim Austausch von Brennerteilen 14 mit den
Schnellverschlußkupplungen 12 stets neue Dichtungselemente
eingesetzt werden, wobei jeweils das Versorgungszwischenstück
13 und das Versorgungsteil 11 mit den umfangreichen Versorgungseinrichtungen und Versorgungsleitungen, z. B. im radioaktiven Bereich, ohne Demontage verbleiben können.

In weiterer Ausgestaltung des Plasmabrenners wird die mit dem
Versorgungszwischenstück 13, 16 zusammengesteckte Schnellverschlußkupplung 12 vorteilhaft mittels einer an sich bekannten
Spannhülse 38 zusammengehalten. Ein oder mehrere Führungsstifte 39 werden hierbei in einer zunächst parallel zur Aufsteckrichtung 40 angeordneten Nut 41 geführt. Die Nut 41 ist auf der
Oberfläche der Schnellverschlußkupplung 12 mit einer geringen
Steigung 42 zur Längsachse 43 eingearbeitet, um die Schnellverschlußkupplung 12 mit einer erforderlichen Pressung für die abdichtende Funktion der Dichtungselemente in axialer Richtung 40
gegen die Kupplungs -

- 8 -

oberfläche 28 des Versorgungszwischenstückes 13, 16 zu drücken. In einem zur Aufsteckrichtung 40 gekrümmten Endbogen 44 wird schließlich die Spannhülse 38 in der vorgespannten Lage gehalten.

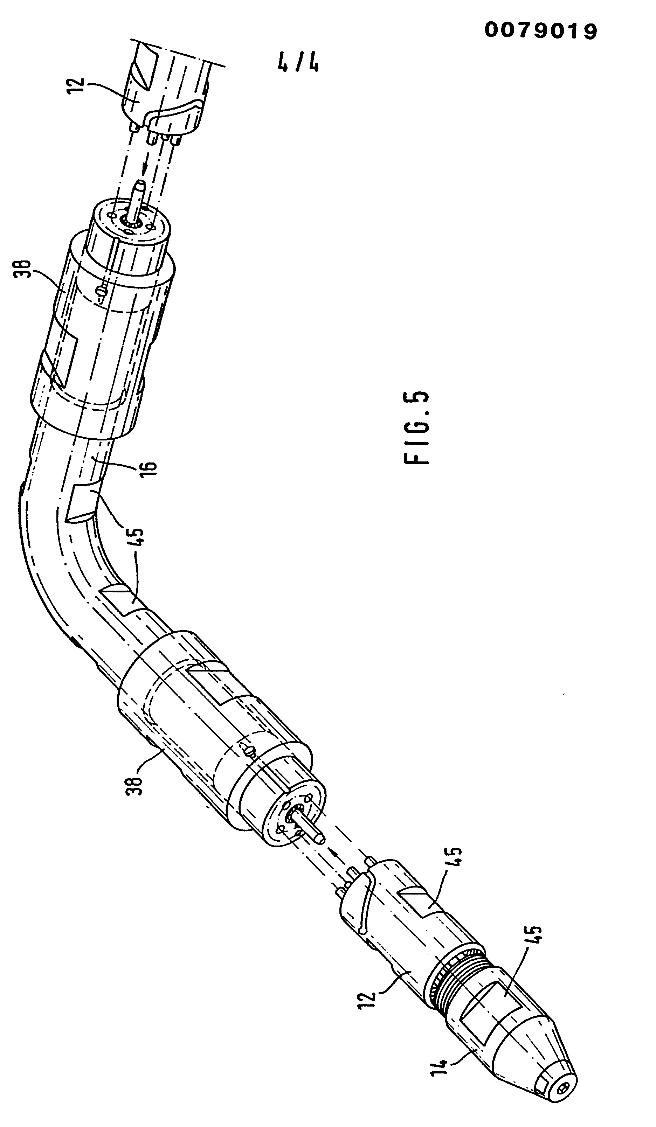

Je nach der gegebenen Aufgabe, der Schneidebene, der günstigsten Handhabung, z. B. bei Unterwasserschneiden durch Taucher wird ein Versorgungszwischenstück 13 mit einer spezifischen Kröpfung 16 z. B. von 90° gemäß Fig. 5 ausgewählt, um ohne die schweren Schneideinrichtungen mit der Vielzahl von Zuführungseinrichtungen und dem Versorgungsteil 11 aus der vertikalen Ebene bei der Brennerhandhabung bewegen zu müssen. Insofern ist es möglich, z. B. Rohre zur Erzeugung glatter Schneidflächen tangential anzuschneiden oder Flächen unterhalb einer Konstruktion ohne Mühe von unten nach oben zu schneiden.

Dabei ist das gekröpfte Versorgungszwischenstück 16 über zwei Schnellverschlußkupplungen 12 mit dem Brennerteil 14 und mit dem nicht näher dargestellten Versorgungsteil 11 verbindbar.

Das Versorgungszwischenstück 13, 16 die Spannhülse 38, die Schnellverschlußkupplung 12 und das Brennerteil 14 sind an der Oberfläche mit an sich bekannten Ausnehmungen 45 ausgestaltet, die den Greiforganen von Manipulatoren angepaßt sind, so daß das Lösen, Zusammensetzen und Verriegeln der vorgenannten Teile ohne zusätzliches Werkzeug durchführbar ist. Wenn bei einem defekten Brennerteil 14 selbst die relativ einfach ausgebildete Schnellverschlußkupplung 12 mit verschrottet wird, ist eine Instandsetzung der Plasma-Schneideinrichtung durch Ersatz einer Schnellverschlußkupplung 12 mit fertigmontiertem Brennerteil 14 im Hinblick auf den geringen Materialeinsatz und Arbeitsaufwand äußerst günstig. Dennoch ist ein Austausch eines defekten Brennerteils 14 an ausgekuppeltem Versorgungszwischenstück 13, 16 wegen der einfachen Handhabung dieser von der Schneideinrichtung

- 9 -

abgetrennten Teile 12 und 14 mittels eines Manipulators durchführbar. Ein unnötiger Verlust der Schnellverschlußkupplung 12 wird dadurch vermieden.

Gr/Le

Patentansprüche

1. Plasmabrenner, insbesondere zum Schneiden in radioaktiven Räumen, bestehend aus zwei miteinander verbindbaren Teilen, wobei der eine, der Versorgungsteil, Zuleitungen für Plasmagas und Strom sowie gegebenenfalls Zu- und Rückleitungen für ein Kühlmittel und der andere, der Brennerteil, eine Elektrode sowie eine Düse aufweist, aus der ein Plasmastrahl austritt,
dadurch gekennzeichnet,
daß die Austritts-Richtung (60) des Plasmaschneidstrahls(61) durch Anschluß des Brennerteils (14) an ein entsprechend geformtes, zwischen Versorgungsteil (11) und Brennerteil (14) angeordnetes Versorgungszwischenstück (13,16,19) veränderbar ist.

2. Plasmabrenner nach Anspruch 1,
dadurch gekennzeichnet,
daß das Versorgungszwischenstück gerade (13) oder stumpfwinklig bis spitzwinklig gekröpft (16) ausgebildet ist.

3. Plasmabrenner nach Anspruch 1 oder 2,
dadurch gekennzeichnet
daß das Versorgungszwischenstück (19) biegbar ausgebildet ist.

4. Plasmabrenner nach einem der Ansprüche 1 bis 3,
dadurch gekennzeichnet,
daß zur Verbindung des Versorgungsteils (11) mit dem Versorgungszwischenstück (13,16,19) und dem Versorgungszwischenstück (13,16,19) mit dem Brennerteil (14) zwischen Versorgungsteil (11) und Versorgungszwischenstück (13,16,19) sowie zwischen Versorgungszwischenstück (13,16,19) und Brennerteil (14) eine Schnellverschlußkupplung (12) angeordnet ist.

Gr/Le

FIG. 1

0079019

1 / 4

FIG.2

2/4

0079019

FIG.3

FIG.4

FIG.5

0079019

Europäisches
Patentamt

**EUROPÄISCHER RECHERCHENBERICHT**

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl. ³) |
|---|---|---|---|
| | --- | | B 23 K    28/00 |
| A | DE-A-2 545 495   (KONSTRUKTORSKIJ I TECHNOLOGITSCHESKIJ INSTITUT) * Anspruch 1; Figur 1 * | 1 | H 05 H    1/26 |
| | --- | | |
| A | EP-A-0 018 123   (J. ZINK CO.) * Figur 1, Position 16 * | 1 | |
| | --- | | |
| A | AU-B-  451 148   (NORTH AMERICAN ROCKWELL CORP.) * Figur 5; Seite 14, Absatz 2 * | 1 | |
| | ----- | | |

RECHERCHIERTE
SACHGEBIETE (Int. Cl. ³)

B 23 K    28/00
B 23 K    31/00
F 23 D    13/00
H 05 H     1/00

Der vorliegende Recherchenbericht wurde für alle Patentansprüche erstellt.

| Recherchenort | Abschlußdatum der Recherche | Prüfer |
|---|---|---|
| BERLIN | 24-01-1983 | WUNDERLICH J E |